# NEUE EUROPÄISCHE PATENTSCHRIFT

(11) **EP 2 031 472 B2**
(45) Veröffentlichungstag und Bekanntmachung des Hinweises auf die Entscheidung über den Einspruch: **06.05.2020**
(45) Hinweis auf die Patenterteilung: 28.11.2012
(21) Anmeldenummer: 08014835.6
(22) Anmeldetag: 21.08.2008
(51) Int. Cl.: G05B 19/414, B25J 9/16

(54) **Vorrichtung zum Betrieb einer Maschine**
Device for operating a machine
Dispositif de fonctionnement d'une machine

(30) Priorität: 30.08.2007 DE 102007041364; 13.10.2007 DE 102007049162
(43) Veröffentlichungstag der Anmeldung: 04.03.2009
(73) Patentinhaber: Robert Bosch GmbH, 70442 Stuttgart (DE)
(72) Erfinder: Bund, Gerhard, 97816 Lohr-Rodenbach (DE)
(74) Vertreter: Schuhbießer, Irmgard Gertrud

(56) Entgegenhaltungen:
- EP-A- 1 720 083
- EP-A1- 1 793 292
- EP-A1- 1 832 398
- WO-A-03/081355
- DE-A1- 10 145 517
- DE-A1- 10 357 824
- US-A- 4 510 565
- US-A- 5 493 194

## Beschreibung

Die Erfindung betrifft eine Vorrichtung zum Betrieb einer Maschine mit elektrisch betriebenen Achsen, insbesondere einer Bearbeitungsmaschine, welche Bewegungsabläufe mit einem funktionalen Zusammenhang ausführt.

Aus dem Stand der Technik sind digitale Mehrachssteuerungen zur Steuerung von Echtzeitvorgängen insbesondere von Bewegungsabläufen mit funktionalem Zusammenhang bspw. aus der WO 03/081355 A1, der EP 1 720 083 A2 oder der DE 197 23 956 A1 bekannt. Die Offenlegungsschrift DE 197 239 56A1 zeigt beispielsweise eine digitale Mehrachssteuerung zur Steuerung von Echtzeitvorgängen. Die Mehrachssteuerung umfasst mehrere dezentrale Instanzen (CPU's), welche durch ein programmierbares Taktsignal auf eine Zentralinstanz (Zentral CPU) synchronisierbar sind.

Die Steuerung ist derart realisiert, dass jeder dezentralen Instanz (CPU 2 bis CPUn) jeweils ein elektrischer Antrieb (A2 bis An) zugeordnet ist. Sowohl zentrale als auch dezentrale Instanzen besitzen jeweils einen zugeordneten Taktgenerator (Q1 bis Qn) mit welchem ein Betriebstakt generiert wird. Von der zentralen Instanz CPU1 aus, welche beispielsweise eine numerische Steuerung darstellen kann, führt eine Taktleitung zu jeder dezentralen Instanz. Über diesen Takt sind die entsprechenden dezentralen Instanzen auf die zentrale Instanz synchronisierbar. Des weiteren sind alle Distanzen mittels eines Bussystems miteinander verbunden.

Antriebs- und Steuerungsapplikationen, welche aus mehreren Achsen bestehen, beispielsweise Werkzeugmaschinen, werden mit derartigen Mehrachssteuerungen ausgestattet. Die zuvor erläuterte Lösung aus der genannten Schrift hat den Nachteil eines hohen Verdrahtungsaufwandes für Takt- und Busleitungen zwischen den dezentralen Instanzen und der zentralen Instanz, was das Ausfallrisiko auf Grund von Laufzeit- und Verdrahtungsfehlern erhöhen kann, und damit die Betriebssicherheit beeinträchtigen kann. Außerdem ist der erhöhte Verdrahtungsaufwand mit Zusatzkosten behaftet, da die Verdrahtungen in der Regel von einem Monteur vor Ort durchgeführt werden müssen. Die übertragbaren Datenmengen sind wegen der Feldbusübertragung und mit zunehmender Länge der Leitungen begrenzt, ebenso sind aufgrund der vorhandenen Leitungen Totzeitoptimierungen limitiert. Alles in allem handelt es sich bei der in der DE 197 239 56 A1 gezeigten Lösung um einen sehr aufwändigen Ansatz, welcher zu erhöhten Maschinenwartungs- und Maschinenherstellkosten führt.

Die Aufgabe der Erfindung liegt darin, eine preiswerte und wartungsunanfällige Vorrichtung zu realisieren, welche zum Betrieb von Maschinen mit elektrisch betriebenen Achsen geeignet ist. Neben dem Kostenansatz spielt auch die Handhabung der Vorrichtung eine große Rolle, insbesondere bei der Montage an der Maschine. Die Vorrichtung soll dementsprechend kompakt ausgeführt und leicht zu montieren sein, so dass der Monteur mit wenigen Handgriffen die Maschine mittels der Vorrichtung in Betrieb nehmen kann.

Die Erfindung löst diese Aufgabe mittels einer Vorrichtung zum Betrieb einer Maschine mit elektrisch betriebenen Achsen gemäß Anspruch 1.

Dies hat den Vorteil, dass man auf die aus dem Stand der Technik bekannten Taktleitungen und Feldbussysteme zur Verbindung der dezentralen und zentralen Instanzen vollständig verzichten kann, da die erforderliche Verdrahtung innerhalb des Gerätes erfolgt und welches bereits bei der Auslieferung vollständig verdrahtet ist, so dass der Kunde sich bezüglich der Verdrahtung keine Gedanken mehr machen muss und auch keinen Aufwand betreiben muss. Die Erfindung stellt somit eine Vorrichtung zur Verfügung, welche alle Komponenten zum Betrieb einer Maschine mit diversen Achsen bereits umfasst. Der Verdrahtungsaufwand reduziert sich daher auf ein Minimum und beschränkt sich lediglich auf die Verbindung der Vorrichtung mit der zu betreibenden Maschine.

Die Vorrichtung stellt sowohl NC- als auch SPS-Funktionalität zur Verfügung, so dass Mehrachsbahninterpolationen und typische SPS-Anwendungen realisierbar sind. Der integrierte Antriebsregler dient zur Regelung der von der anzusteuernden Maschine umfassten Motoren. Zusätzlich kann die Vorrichtung eine Visualiserungssoftware umfassen, mittels derer die Anwender die ablaufenden Prozesse konfigurieren und darstellen können. Es sind damit Mehrachslösungen ohne interne Geräteverdrahtung bei Leistungsbereichen bis 25 Kilowatt oder mehr möglich. Zusätzlich kann ein gemeinsames Kühlsystem für das Leistungsmodul, das Achsregelmodul und das Achssteuermodul verwendet werden, was zusätzlich die Kosten senkt. Auch eine gemeinsame Bedieneinheit kann für alle Module eingesetzt werden, so dass auch hier Kosten eingespart werden können.

Der Unterschied zu bekannten Lösungen liegt demnach darin, dass unter anderem alle Funktionen einer Maschinensteuerung und Achsregelung in einem einzigen Gerät integriert und die kommunizierenden Module bereits vorverdrahtet sind. Da diese Geräte in der Regel in Schaltschränken untergebracht werden, kann man damit die Schaltschrankverdrahtung erheblich reduzieren und dadurch wesentliche Einsparungen erzielen.

Erfindungsgemäss ist in die Vorrichtung ein Vorrichtungssteuermittel integriert, wobei mittels des Vorrichtungssteuermittels die zeitliche Koordination der Abläufe der mittels der zuvor genannten Module realisierten Vorrichtungsfunktionen bewirkt wird. Hierdurch wird es erstmals möglich, dass sowohl leistungsseitig und regelseitig und steuerseitig ein absolut synchroner Betrieb möglich wird, so dass beispielsweise die Antriebsregelung zusammen mit einer von einer Antriebssteuerung durchgeführten Bahninterpolation synchron ablaufen kann. Außerdem werden Totzeiten zwischen der Sollwerterzeugung und der Verarbeitung der Sollwerte reduziert, da aufgrund der internen Verdrahtung und der damit fehlenden Leitungslängen, wie sie bei aus dem Stand der Technik bekannten dezentralen Lösungsansätzen vorherrschen, auch kaum Protokollübertragungszeiten anfallen.

Erfindungsgemäss wird das Vorrichtungssteuermittel mittels einer programmierbaren Logik realisiert, dies könnte beispielsweise ein FPGA sein (Field Programmable Array), wobei diese programmierbare Logik von zumindest einem der Module zusätzlich umfasst ist. Vorzugsweise ist das Vorrichtungssteuermittel am Achsregelmodul angeordnet. Das Achsregelmodul und das Vorrichtungssteuermittel bilden damit einen integralen Bestandteil der Vorrichtung zum Betrieb einer Maschine. Der Vorteil dieser Lösung liegt auch hier auf der Kostenseite. Programmierbare Logikbausteine sind preiswert zu erwerben und können im Gegensatz zu herkömmliche Prozessoren mehrere Logikanweisungen parallel ausführen, was zur Realisierung synchroner Vorgänge vorteilhaft ist.

Erfindungsgemäss ist mittels des Vorrichtungssteuermittels zusätzlich die Kommunikation zwischen zumindest zwei Modulen untereinander realisiert. Vorzugsweise handelt es sich hierbei um das Achsregelmodul und das Achssteuermodul. Es ist jedoch auch denkbar eine Kommunikation zwischen Leistungsmodul und Achssteuermodul zu realisieren. Durch dieses Merkmal kann auf die Verwendung eines externen Bussystems verzichtet werden. Die Kommunikation erfolgt mittels der auf einer Leiterbahn angeordneten gedruckten Schaltung, welche auf den den Modulen zugrunde liegenden Leiterplatten angeordnet sind.

Erfindungsgemäss umfasst das Vorrichtungssteuermittel ein zeitgesteuertes Signalerzeugungsmittel zur Erzeugung von Steuersignalen für die Module, insbesondere für das Achsregelmodul und das Achssteuermodul. Mittels dieser Steuersignale ist es möglich die Abarbeitung von Programmcode in Verbindung mit Unterbrechungsanforderungen (Interrupts) für zumindest eines der Module zu bewirken.

Alternativ oder zusätzlich ist es möglich, dass mittels des Signalerzeugungsmittels auch das Vorrichtungssteuermittel selbst getaktet bzw. betrieben wird. Es ist damit gezielt möglich, die Funktion der mittels der Steuersignale angesteuerten Module zu beeinflussen und damit die Module bezüglich ihrer Funktion zu synchronisieren. Zusätzlich können innerhalb des Vorrichtungssteuermittels ablaufende Prozesse, sofern sie ebenfalls mittels der Steuersignale steuerbar sind, mit den Modulfunktionen auf gleiche Art und Weise synchronisiert werden. Dies hilft etliche Verzögerungen zwischen den Modulfunktionen und/oder den Vorrichtungssteuermittelfunktionen auf ein Mindestmaß zu reduzieren.

Vorteilhafter Weise umfasst das Vorrichtungssteuermittel zumindest zwei Funktionsblöcke, mittels derer zumindest zwei Module an das Vorrichtungssteuermittel anschließbar sind, so dass die vom Signalerzeugungsmittel erzeugten Steuersignale für die anschließbaren Module zur Realisierung einer Unterbrechungsanforderung für die anschließbaren Module an diese weiterleitbar sind und/oder so dass eine Kommunikation zwischen den anschließbaren Modulen realisierbar ist, wobei insbesondere jeweils an dem ersten Funktionsblock das Achsregelmodul und an dem zweiten Funktionsblock das Achssteuermodul angeschlossen ist. Letztlich stellen die Funktionsblöcke Schnittstellen zwischen den Modulen und dem Vorrichtungssteuermittel dar.

Bevorzugt umfassen die Funktionsblöcke ebenfalls Schnittstellen zum Austausch von für den Betrieb der Maschine relevanten Daten zwischen dem Vorrichtungssteuermittel und den Modulen sowie gegebenenfalls zwischen den Modulen untereinander. Bei diesen Daten kann es sich beispielsweise um Soll- oder Istwertübertragungen handeln, welche sowohl für das Achsregelmodul als auch für das Achssteuermodul von Interesse sein können. Ebenso könnten diese Daten innerhalb des Vorrichtungssteuermittels verarbeitet werden, beispielsweise in Verbindung mit Messvorgängen oder mit Auswertungen der Feedbacksignale, so dass auch eine Weitergabemöglichkeit der Daten an das Vorrichtungssteuermittel sinnvoll sein kann.

Ganz besonders bevorzugt ist beispielsweise die Versorgung von Maschinenachsen mit Energie unter Verwendung des Leistungsmoduls, mittels des Vorrichtungssteuermittels steuerbar. Insbesondere könnte der zur Erzeugung der Antriebs-/Ansteuerströme erforderliche Pulsweitenmodulator unter Verwendung des Vorrichtungssteuermittels angesteuert werden, so dass die Ansteuerung dieses Pulsweitenmodulators beispielsweise synchron mit auf dem Antriebssteuermodul oder dem Antriebsregelmodul ablaufenden Prozessen in Einklang gebracht werden könnte.

Die Funktionen des Achsregelmoduls und Achssteuermoduls sind mittels einer dem jeweiligen Modul zugeordneten separaten Recheneinheit realisiert, welche mittels eines Echtzeitbetriebssystems betrieben wird. Die Scheduler eines oder beider Echtzeitbetriebssysteme können ebenfalls mittels der vom Vorrichtungssteuermittels erzeugten Steuersignalen angesteuert werden, so dass auch das Echtzeitbetriebssystem relativ zu anderen Vorrichtungsfunktionen synchronisierbar ist. Dadurch ergeben sich vielfältige Möglichkeiten, um alle Komponenten der erfindungsgemäßen Vorrichtung miteinander zu synchronisieren oder einem vorgegebenen Zeitraster zu unterwerfen.

Vorteilhafter Weise ist eine externe Bedieneinheit an die erfindungsgemäße Vorrichtung anschließbar, mittels der alle Komponenten der Vorrichtung konfigurierbar und überwachbar sind. Es wäre auch möglich diese Bedieneinheit zusätzlich in die Vorrichtung zu integrieren.

Bevorzugt wird eine Bearbeitungsmaschine, insbesondere eine Werkzeugmaschine mit einer Vorrichtung nach einem der vorherigen Ansprüchen ausgestattet und betrieben. Es gibt jedoch vielfältige weitere Anwendungsmöglichkeiten, beispielsweise könnte ein Roboter mit einer erfindungsgemäßen Vorrichtung ausgestattet und betrieben werden.

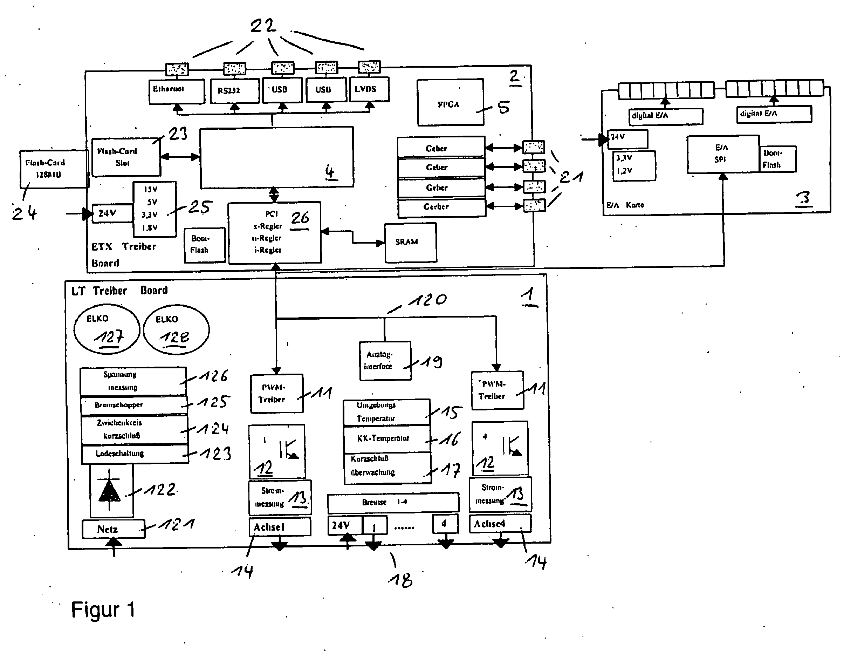

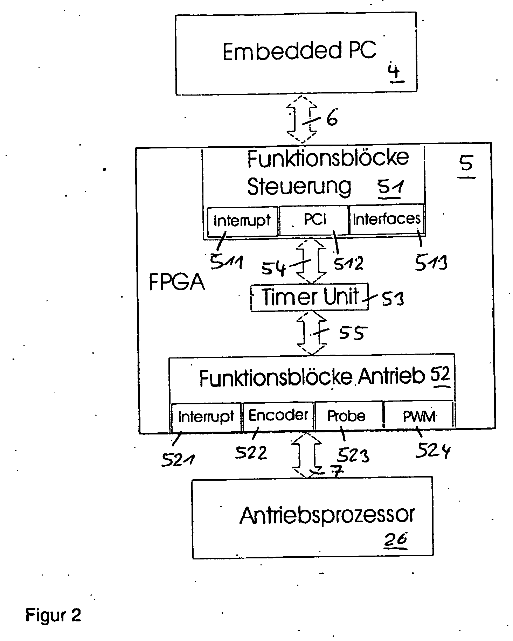

Anhand der folgenden Figuren 1 und 2 wird der interne Aufbau der erfindungsgemäßen Vorrichtung beispielhaft erläutert und deren Basisfunktionen dieser beschrieben.

Figur 1 zeigt beispielhaft die Realisierung der erfindungsgemäßen Vorrichtung mittels verschiedener integrierter und verdrahteter Module.

Figur 2 zeigt ein Prinzipschaltbild des Vorrichtungssteuermittels und dessen Funktionsblöcke.

Figur 3 zeigt die erfindungsgemäße Vorrichtung im montierten Zustand mit (rechts) und ohne (links) Abdeckung.

Gleiche Bezugszeichen bezeichnen bei den nun folgenden Figurenbeschreibungen identische Vorrichtungskomponenten.

Figur 1 zeigt vier bedruckte Schaltungen auf separaten Platinen 1, 2, 3, 4 wie sie für einen Prototypen der erfindungsgemäßen Vorrichtung realisiert wurden. Selbstverständlich kann sowohl die Anordnung der Komponenten auf den Platinen 1, 2, 3, 4 relativ zueinander, als auch die Realisierung der Funktionsblöcke auf den Platinen 1, 2, 3, 4 durch fachmännische Abwandlungen auch in geänderter Form realisiert werden, ohne den erfindungsgemäßen Gedanken dabei aus dem Auge zu verlieren.

Die Platine 1 im Bild unten repräsentiert das sogenannte Leistungsmodul 1 der erfindungsgemäßen Vorrichtung. Dieses Leistungsmodul 1 dient zur Versorgung der Achsantriebe einer Maschine, welche mittels der Vorrichtung betrieben wird. Die Versorgung erfolgt mittels einer dreiphasigen Versorgungsspannung. Es können beispielsweise mittels des hier gezeigten Leistungsmoduls 1 vier Achsen angesteuert werden. Hierzu umfasst die Platine 1 für jede Achse jeweils einen Treiber 11 zur Ansteuerung eines Transistormoduls bzw. IGBT-Moduls 12, eine Strommesseinrichtung 13 und eine Schnittstelle zum Anschluss der anzutreibenden Achsen 14. Dieses Konzept ist erweiterbar auf weitere Achsen, beispielsweise sechs oder acht Achsen. Es könnte ebenfalls auf weniger als vier Achsen reduziert werden. Zusätzlich vom Modul 1 umfasst ist eine elektronische Schaltung zur Überwachung der Umgebungstemperatur 15, eine Schaltung zur Überwachung der Kühlkörpertemperatur 16 und eine Schaltung zur Kurzschlussüberwachung 17. Ebenso anschließbar an die Platine sind vier Motorbremsen. Die Anzahl der Bremsanschlüsse 18 entspricht stets der Anzahl der Achsen. Die PWM-Treiber 11 und ein analoges Interface 19 sind mit der Recheneinheit des später erläuterten Achsregelmoduls 2 mittels des Datenbusses 120 verbunden.

Zusätzlich umfasst das Leistungsmodul 1 einen Netzanschluss 121, beispielsweise für ein dreiphasiges Netz, sowie einen Gleichrichter 122, welcher die eingespeiste dreiphasige Spannung in eine Zwischenkreisspannung umwandelt. Der Zwischenkreis umfasst dann weiterhin eine Ladeschaltung 123, eine Zwischenkreiskurzschlussüberwachung 124, einen Brems-Chopper 125 und eine Spannungsmessschaltung 126. An den Brems-Chopper 125 wird ein externer Widerstand angeschlossen, welcher die überschüssige Energie im Rückspeisefall in Wärme umwandelt.

Gezeigt sind bei dieser Lösung auch zwei Elektrolytkonsentatoren 127 und 128, welche zur Pufferung des Zwischenkreises dienen können. Alternativ und gegebenenfalls separat vom Leistungsmodul 1 könnte allerdings auch ein Energiespeichermodul als externer Puffer (nicht gezeigt) vorgesehen sein, welches mit einer Vielzahl von Elektrolytkonsentatoren ausgestattet ist. Das Energiespeichermodul (nicht gezeigt) wäre dann weiterer integraler Bestandteil der Vorrichtung.

Das Leistungsmodul 1 wird auf einem Kühlkörper montiert (nicht gezeigt) und zwar so, dass die IGBT-Module 12 unmittelbar am Kühlkörper anliegen. Im montierten Zustand wird später ein Kühl- und Lüftungsmodul (nicht gezeigt) vorgesehen, welches sowohl zur Beaufschlagung des Kühlkörpers, als auch aller Vorrichtungsmodule 1,2,3,4, mit Kühlluft dient. Es gibt zwei mögliche Ausgestaltungsformen für das Leistungsmodul 1. Die erste Ausgestaltungsform wäre eine Lösung mittels Wechselrichter, welcher eine zugeführte Zwischenkreisgleichspannung in eine Dreiphasenspannung umwandelt, um die Motoren zu betreiben. Eine zweite mögliche Ausgestaltungsform stellt die hier in Figur 1 gezeigt die Lösung mit Umrichter dar. Bei dieser Lösung wird dem Leistungsmodul 1 mittels des Netzanschlusses 121 eine Wechselspannung zugeführt und mittels Gleichrichtung 122 und Zwischenkreis 124 letztlich wieder in eine Wechselspannung mit anderer Frequenz umgewandelt.

In Figur 1 ist ebenfalls das Achsregelmodul 2 gezeigt. Das Achsregelmodul 2 dient der Regelung von anzusteuernden Maschinenachsantrieben. Die Regelsoftware zur Achsregelung ist mittels eines Prozessors 26 bzw. einer Recheneinheit 26 ablauffähig im Achsregelmodul 2 implementiert. Zur Achsregelung umfasst das Leistungsmodul 2 diverse Eingänge 21 für Feedbackeinheiten, welche die Drehzahl und/oder die Lage der Achsantriebe erfassen und an das Achsregelmodul 2 zu Regelzwecken weiterleiten können. Ferner umfasst das Board 2 diverse Anschlüsse 22, beispielsweise einen Ethernetanschluss, einen RS232-Anschluss, einen USB - Anschluss und einen LVDS - Anschluss. Alle diese Anschlüsse 22 dienen letztendlich zur Kommunikation mit an das Board 2 beziehungsweise die Vorrichtung anschließbarer Peripherie. Dies könnte beispielsweise eine Bedieneinheit, ein externer Rechner oder eine zusätzliche externe Steuer- und Regelkomponente sein (nicht gezeigt). Weitere Komponenten, die vom Leistungsmodul 2 umfasst sind, sind zum Beispiel, Einschübe 23 für externe Speichermedien, wie beispielsweise Flashkarten 24, und diverse Spannungsversorgungen 25 zum Betrieb der auf dem Board 2 installierten integrierten Schaltkreise. Mittels des Prozessors 26 ist auch die Kommunikation mittels Bus 120 zwischen Leistungsmodul 1 und Achsregelmodul 2 realisiert.

An den Datenbus 120 ist ein weiteres Modul 3 optional anschließbar. Es handelt sich bei diesem Modul 3 um eine digitale Eingabe-/Ausgabeeinheit. Von Haus aus umfasst jedoch das Leistungsmodul 1 schon digitale Eingabe-/Ausgabeeinheiten und das Zusatzmodul 3 ist nicht zwingend erforderlich, bringt jedoch den Vorteil der Erweiterbarkeit der Vorrichtung mit sich.

Ebenso aus Figur 1 ersichtlich ist das Achssteuermodul 4, welches eine separate Einheit darstellt, jedoch unmittelbar auf einen entsprechende Anschlusssockelam Achsregelmodul 2 aufgesteckt ist. Das Achssteuermodul 4 repräsentiert ein voll funktionsfähiges Prozessormodul 4 inklusive Speicher und Schnittstellen, welches eine Firmware umfasst, die mittels eines Echtzeitbetriebssystems abläuft. Mittels dieser Firmware ist die komplette Steuerfunktionalität der Vorrichtung abgebildet. Die Vorrichtung kann sowohl die Funktion einer programmierbaren Steuerung (SPS), als auch oder alternativ dazu die Funktion einer Mehrachsbahninterpolation und/oder einer Prozessvisualisierung umfassen. Achssteuerung und Achsregelung sind demgemäß mittels unterschiedlicher Hardware und unterschiedlicher Software auf getrennten Modulen 2, 4 unabhängig voneinander realisiert, können jedoch miteinander kommunizieren.

Auf dem Achsregelmodul 2 ist ein Vorrichtungssteuermittel 5 vorgesehen. Dieses Vorrichtungssteuermittel 5 dient dazu die zeitliche Koordination der Abläufe der mittels der Module 1, 2 und 4 realisierten Vorrichtungsfunktionen zu übernehmen. Das Vorrichtungssteuermittel 5 ist vorzugsweise mittels einer programmierbaren Logik, beispielsweise eines FPGA realisiert und könnte alternativ auch auf dem Leistungsmodul 1 oder dem Achssteuermodul 4 angeordnet sein. Das Vorrichtungssteuermittel 5 koordiniert vorzugsweise auch die Kommunikation zwischen allen Vorrichtungsmodulen 1,2,4 und ggf. Modul 3.

Wie schon erwähnt, wird das Leistungsmodul 1 auf einem Kühlkörper (nicht gezeigt) montiert. Zusätzlich wird an den Längsseiten des Kühlkörpers eine Haltevorrichtung (nicht gezeigt) angebracht, welche zum einen zur Montage der Vorrichtung in einem Schaltschrank dient und zum anderen das Achsregelmodul 2 fixiert, so dass es parallel zum Leistungsmodul 1 und zum Kühlkörper anordenbar ist. Zwischen der Ebene der Leistungsmodulplatine 1 und der parallel dazu mittels der Haltevorrichtung angeordneten Achsregelmodulplatine 2 kann Kühlluft strömen, die vom Lüfter des Kühlmoduls (nicht gezeigt) erzeugt wird. Die Haltevorrichtung dient zusätzlich zur Aufnahme einer Gehäuseabdeckung, welche die Gesamtanordnung schützt. Das komplett montierte Gerät kann dann mittels der Haltevorrichtungen im Schaltschrank derart montiert werden, dass die Anschlüsse des Gerätes von der Vorderseite des Schaltschrankes bei geöffneter Schaltschranktür zugänglich sind. Die Haltevorrichtung umfasst zusätzlich eine Erdanbindung zur Erdung der Vorrichtung. Auch eine Schirmauflage zur Anordnung einer Abschirmung ist von der Haltevorrichtung umfasst.

Figur 2 zeigt schematisch etwas detaillierter den Aufbau des bereits zuvor erwähnten Vorrichtungssteuermittels 5 (siehe Platine 2 aus Figur 1). In Figur 2 ist der bereits aus der Figurenbeschreibung der Figur 1 bekannte Prozessor 4 nochmals gezeigt, welcher letztlich das Achssteuermodul repräsentiert. Dieser Prozessor 4 ist mittels einer bidirektionalen Datenverbindung 6 mit dem Vorrichtungssteuermittel 5 derart verbunden, dass beide Komponenten untereinander Daten austauschen können. Ebenfalls gezeigt, ist der bereits aus der Figurenbeschreibung zu Figur 1 bekannte Prozessor 26 des Achsregelmoduls 2, welcher ebenfalls mittels einer bidirektionalen Datenverbindung 7 mit dem Vorrichtungssteuermittel 5 kommunizieren kann.

Der gezeigte interne Aufbau des Vorrichtungssteuermittels 5 ist lediglich grob schematisch mittels Funktionsblöcken dargestellt. Das Vorrichtungssteuermittel 5 besteht aus zumindest zwei Funktionsblöcken 51 und 52, wobei der erste Funktionsblock 51 für die Recheneinheit 4 des Achssteuermoduls 2 und der zweite Funktionsblock 52 für den Prozessor 26 das Achsregelmoduls 2 vorgesehen ist. Mittels beider Funktionsblöcke 51,52 wird die Anbindung der Prozessoren 26 und 4 an das Vorrichtungssteuermittel 5 schaltungstechnisch realisiert.

Die Funktionsblöcke 51 und 52 umfassen wiederum mehrere Komponenten, welche mittels der in Figur 2 gezeigten Blöcke 511,512,513 und 521, 522, 523 und 524 angedeutet sind. Der Funktionsblock 51 umfasst beispielsweise ein Mittel 511 zur Weiterleitung von Unterbrechungsanforderungen an einen angeschlossenen Achssteuermodulprozessor 4. Weiterhin umfasst der Funktionsblock 51 eine Kommunikationsschnittstelle 512, so dass der Achssteuermodulprozessor 4 mit dem Vorrichtungssteuermittel 5 Daten jeglicher Art austauschen kann.

Mittels der Schnittstelle 512 können Daten vom Antriebssteuermodulprozessor 4 mittels des Datenbusses 6, des Funktionsblockes 51, des internen Datenbusses 54 und 55 und des Signalerzeugungsmittel 53 sowie des Funktionsblockes 52 und des Datenbusses 7 an den Antriebsregelmodulprozessor 26 übertragen werden und umgekehrt.

Zusätzlich können für den Funktionsblock 51 weitere Schnittstellen 513 vorgesehen sein, beispielsweise ein Feldbus- oder ein SERCOS - Interface. Auch bietet der Funktionsblock Schnittstellen 513 für Debugging- und Diagnosezwecke. Mittels dieser Debugging und Diagnoseschnittstellen ist es möglich das System bzw. die erfindungsgemäße Vorrichtung im Betrieb zu überwachen und mögliche Fehlerquellen vorzeitig ausfindig zu machen. Mittels der Schnittstellen 513 können somit vorhanden Schnittstellen der Antriebssteuerung 4 erweitert werden.

Auch der Funktionsblock 52 zum Anschluss des Prozessors 26 des Achsregelmoduls 2 besteht aus mehreren Einzelkomponenten. Auch hier ist eine Einheit 521 zur Weiterleitung von Unterbrechungsanforderungen an den Prozessor 26 vorgesehen Weiter ist eine Encoderschnittstelle 522 zur Anwendung in Verbindungen mit Positionsgebersignalen vorgesehen. Eine PWM-Schnittstelle 524 erlaubt die Ansteuerung des Pulsweitenmodulators (PWM-Modulator) zur Ansteuerung der Leistungshalbleiter 12 mittels der PWM-Treiber 11 auf dem Leistungsmodul 1 durch das Vorrichtungssteuermittel 5.

Der vom Funktionsblock 52 für das Antriebsregelmodul 2 umfasste Encoder 522 kann an die erfindungsgemäße Vorrichtung angeschlossene Feedbackeinheiten synchron zum Signal des Signalerzeugungsmittels 53 auswerten. Es können mehrere Encoder-Schnittstellen 522 unterschiedlichster Hersteller vorgesehen werden. Beispielsweise wäre eine Schnittstelle nach EnDat- oder Hyperface-Standard denkbar. Auch einfache Rechteck- oder Sinusgeberanschlüsse oder sonstige herstellerspezifische Geberschnittstellen können vorgesehen werden (z.B. Panasonic Interface, etc.). Alle Schnittstellen sind mittels des Signalerzeugungsmittels 53 zur gleichen Zeit auswertbar, wodurch eine exakte Bahninterpolation ermöglicht wird.
Das Probe-Interface 523 ist in der Lage angeschlossene digitale Messwerte entgegenzunehmen. Beispielsweise könnten mehrere Eingänge vorgesehen werden, welche positive und negative Flanken getrennt auswerten. Die Messung wird dann gesteuert mittels des Vorrichtungssteuermittels 5 synchron zur Encodersignalauswertung durchgeführt, um beispielsweise Achspositionen abhängig vom Auftreten eines externen und durch Messung erfassten Ereignisses mittels einer der von der Vorrichtung umfassten Recheneinheiten exakt zu berechnen.

Das Signalerzeugungsmittel 53 dient der Erzeugung von Steuersignalen. Dieses Signalerzeugungsmittel 53 wurde im Beispiel hier mittels eines Timers 53 realisiert und kann mit beiden Funktionsblöcken 51,52 kommunizieren mittels Bus 54,55. Das Signalerzeugungsmittel 53 ist derart realisiert, dass es sowohl Steuersignale erzeugen, als auch Daten verarbeiten kann. Es ist ebenfalls möglich mittels des Signalerzeugungsmittels 53 eine direkte Kommunikationsverbindung zwischen dem Prozessor 4 des Achssteuermoduls 1 und dem Prozessor 26 des Achsregelmoduls 2 herzustellen. Das Signalerzeugungsmittel 53 dient daher neben der Signalerzeugung auch noch als Kommunikationsschnittstelle zwischen den Modulprozessoren 4 und 26.

Es ist denkbar noch weitere Modulschnittstellen auf dem Vorrichtungssteuermittel 5 vorzusehen. So könnte es beispielsweise auch für das das Leistungsmodul 1 nochmals einen separaten Funktionsblock erhalten, so dass dieses mit den anderen Modulen 2,3 in Kontakt zu treten oder Signale direkt von den Signalerzeugungsmitteln 53 entgegennehmen kann. Mittels des Signalerzeugungsmittels 53 werden unter anderem Signale an die Funktionsblöcke 51 bzw. 52 weitergeleitet, die von den jeweiligen Prozessoren 4 und 26 als Interrupt erkannt werden. Die Interrupts werden mittels der bidirektionalen Datenverbindung 6,7 zwischen den Prozessoren 4 und 26 und mittels der Funktionsblöcke 51 und 52 des Vorrichtungssteuermittels 5 an die Prozessoren 4 und 26 übermittelt. Der jeweilige Prozessor 4, 26 erkennt den Interrupt und startet eine für diesen Interrupt vorgesehene Interrupt-Service-Routine. Damit wird die Datenverarbeitung im Achssteuermodulprozessor 3 bzw. im Achsregelmodulprozessor 2 direkt durch das Signalerzeugungsmittel 53 kontrollierbar. Es ist somit möglich mittels des Vorrichtungssteuermittels 5 angesteuerte Module bzw. deren Funktionalität in Verbindung mittels der Interruptleitungen gezielt zu beeinflussen und damit eine Synchronizität herzustellen.

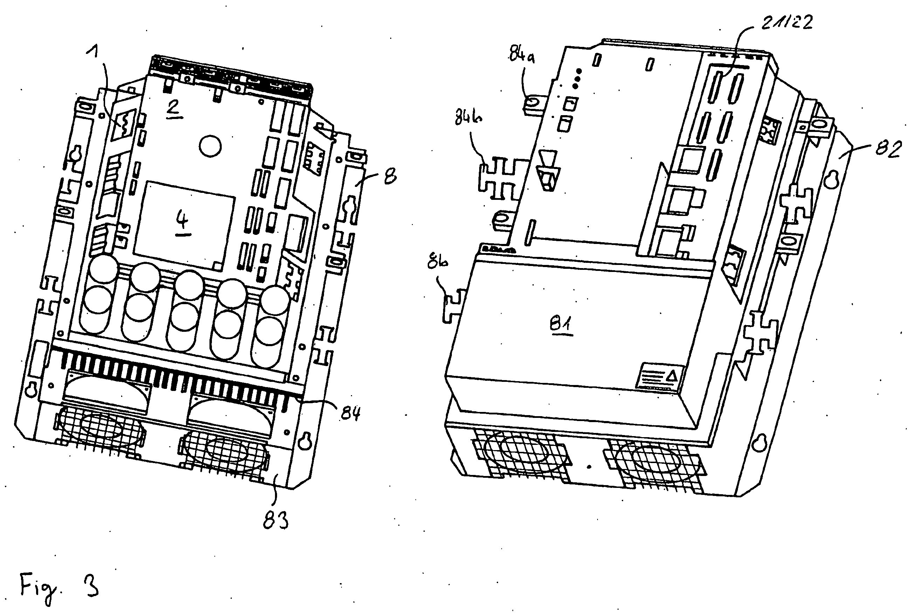

In Figur 3 ist die erfindungsgemäße Vorrichtung im montierten Zustand mit (rechts) und ohne (links) Gehäuse 81 gezeigt. In den Zeichnungen links und rechts sieht man die Haltevorrichtung 82 zur Befestigung der Vorrichtung innerhalb eines Schaltschrankes und zur Arretierung der Vorrichtungsmodule 1,2, 3 und 4 sowie eines ggf. optional vorhandenen Energiespeichermoduls 9. Ebenso gezeigt ist das Lüftermodul 83 und der Kühlkörper 84, an dem das Leistungsmodul 1 zusätzlich angeordnet ist. Die Abdeckung 81 schützt die gesamte Anordnung von Schmutz und Umgebungseinflüssen. Die Abdeckung 81 umfasst außerdem Aussparungen für die Anschlüsse 21 und 22 des Achsregelmoduls 2 sowie für Eingabe/Ausgabeeinheiten ggf. in Verbindung mit dem optionalen Erweiterungsmodul 3. Eine im Schaltschrank vorhandene Erdung und Schirmung kann an den Anschlüssen 84a und 84b der Haltevorrichtung 82 angeordnet werden. Der Netzanschluss 121 ist ebenfalls von außerhalb des Gehäuses 81 zugänglich, jedoch nicht im Bild zu sehen.

Die erfindungsgemäße Vorrichtung hat den Vorteil, dass sie sowohl die Regelvorgänge als auch die Bahninterpolationsvorgänge absolut synchron mit geringst möglichem Jitter ausführen kann. Zusätzlich werden aufgrund der kurzen Kommunikationswege Totzeiten und Laufzeiten zwischen den Vorrichtungsmodulen 1, 2, 3 ,4 auf ein Mindestmaß reduziert, so dass beispielsweise zwischen der Sollwerterzeugung in den Recheneinheiten und der tatsächlichen Verarbeitung im Antrieb vernachlässigbare Laufzeiten auftreten. Was die Protokollübertragungszeiten betrifft, so verbessert dies die Präzision und Zuverlässigkeit der ausgeführten, zusammenhängenden Bewegungsabläufe an der von der erfindungsgemäßen Vorrichtung angesteuerten Maschine.

## Patentansprüche

1. Vorrichtung zum Betrieb einer Maschine mit mehreren elektrisch betriebenen Achsen, insbesondere einer Bearbeitungsmaschine, welche Bewegungsabläufe mit einem funktionalen Zusammenhang ausführt, wobei die Vorrichtung zur Anordnung in einem Schaltschrank ausgebildet ist und ein Gehäuse (81), ein Leistungsmodul (1) zur Versorgung von mehreren Achsantrieben mit elektrischer Energie, ein Achsregelmodul (2) zur Regelung von mehreren achsspezifischen Kenngrößen und ein Achssteuermodul (4) zur Steuerung von mehreren Achsantrieben untereinander umfasst, wobei die Module (1,2,4) als integraler Bestandteil der Vorrichtung innerhalb des Gehäuses (81) der Vorrichtung miteinander verschaltet sind, wobei auch ein Vorrichtungssteuermittel (5) integraler Bestandteil der Vorrichtung ist und wobei mittels des Vorrichtungssteuermittels (5) die zeitliche Koordination der Abläufe der mittels der Module (1, 2, 4) realisierten Vorrichtungsfunktionen realisiert ist,
wobei die Funktionen des Achsregelmoduls (2) und des Achssteuermoduls (4) mittels eines in einer dem jeweiligen Modul (2, 4) zugeordneten separaten Recheneinheit mittels eines Echtzeitbetriebssystem realisiert sind, wobei beide Echtzeitbetriebssysteme mittels des Vorrichtungssteuermittels (5) steuerbar sind,
wobei mittels des Vorrichtungssteuermittels (5) zusätzlich die Kommunikation zwischen zumindest zwei Modulen (1, 2, 4) untereinander realisiert ist,
wobei von dem Vorrichtungssteuermittel (5) ein zeitgesteuertes Signalerzeugungsmittel (53) zur Erzeugung von Steuersignalen für die Module (1, 2, 4) umfasst ist, wobei mittels der Steuersignale die Abarbeitung von Programmcode in Verbindung mit Unterbrechungsanforderungen für zumindest eines der Module (1, 2, 4) steuerbar ist, und wobei das Vorrichtungssteuermittel (5) mittels einer programmierbaren Logik realisiert ist, welche zumindest von einem der Module (1, 2, 4) umfasst ist.

2. Vorrichtung nach Anspruch 1, wobei auch die Funktionen des Vorrichtungssteuermittels (5) selbst mittels der Steuersignale steuerbar sind.

3. Vorrichtung nach Anspruch 2, wobei das Vorrichtungssteuermittel (5) zumindest zwei Funktionsblöcke (51,52) umfasst, mittels derer zumindest zwei Module (1,2,4) an das Vorrichtungssteuermittel (5) anschließbar sind, so dass die vom Signalerzeugungsmittel (53) erzeugten Steuersignale für die anschließbaren Module (1, 2, 4) zur Realisierung einer Unterbrechungsanforderung für die anschließbaren Module (1, 2, 4) an die Module (1, 2, 4) weiterleitbar sind und/oder so dass eine Kommunikation zwischen den anschließbaren Modulen (1, 2, 4) realisierbar ist, wobei insbesondere jeweils an den ersten Funktionsblock (51) das Achssteuermodul (4) und an den zweiten Funktionsblock (52) das Achsregelmodul (2) angeschlossen ist.

4. Vorrichtung nach Anspruch 3, wobei die Funktionsblöcke (51,52) Schnittstellen zum Austausch von für den Betrieb der Maschine relevante Daten zwischen dem Vorrichtungssteuermittel (5) und den Modulen (1, 2, 4) sowie zwischen den Modulen (1, 2, 4) untereinander umfassen.

5. Vorrichtung nach einem der vorhergehenden Ansprüche, wobei mittels des Vorrichtungssteuermittels (5) die Versorgung von Maschinenachsen mit Energie unter Verwendung des Leistungsmoduls (1) steuerbar ist, insbesondere ein zur Erzeugung von Antriebsansteuerströmen vorgesehener Pulsweitenmodulator.

6. Vorrichtung nach einem der vorhergehenden Ansprüche, wobei eine Bedieneinheit anschließbar ist.

7. Vorrichtung nach einem der vorhergehenden Ansprüche, wobei eine weiteres Modul (3) in Form einer Ein-/Ausgabeeinheit (3) integraler Bestandteil der Vorrichtung ist, welches innerhalb der Vorrichtung an zumindest einem der Module (1, 2, 4) mittels einer Andockschnittstelle angeordnet ist.

8. Bearbeitungsmaschine, insbesondere Werkzeugmaschine, mit Vorrichtung nach einem der vorhergehenden Ansprüche.

9. Roboter, mit einer Vorrichtung nach einem der vorhergehenden Ansprüche 1 bis 7.

## Claims

1. Device for operating a machine with multiple electrically-operated axles, in particular a processing machine that executes sequences of movements that are related from a functional perspective, whereby the device is designed to be arranged in a switch cabinet and comprises a housing (81), a power module (1) for supplying multiple axle drives with electrical energy, an axle regulator module (2) for regulating multiple axle-specific parameters, and an axle control module (4) for controlling multiple axle drives, whereby the modules (1, 2, 4) are connected to one another as an integral component of the device within the housing (81), whereby a device controller (5) is also an integral component of the device, and whereby the device controller (5) coordinates the temporal sequence of the device functions realized by the modules (1, 2, 4),
whereby the functions of the axle regulator module (2) and the axle control module (4) are realized by means of a real-time operating system in a separate processing unit assigned to the respective module (2, 4), whereby both real-time operating systems can be controlled using the device controller (5), whereby the device controller (5) is also used to realize communication between at least two modules (1, 2, 4), whereby the device controller (5) includes a time-based signal generator (53) for generating control signals for the modules (1, 2, 4), whereby the control signals can be used to control the processing of program code in connection with interruption requests for at least one of the modules (1, 2, 4), and whereby the device controller (5) is realized by means of programmable logic covered by at least one of the modules (1, 2, 4).

2. Device according to claim 1, whereby the functions of the device controller (5) itself are also controllable via the control signals.

3. Device according to claim 2, whereby the device controller (5) includes at least two function blocks (51, 52) that can be used to connect at least two modules (1, 2, 4) to the device controller (5), so that the control signals generated by the signal generator (53) for the connectible modules (1, 2, 4) can be transmitted to the modules (1, 2, 4) in order to realize an interruption request for the connectible modules (1, 2, 4), and/or so that communication can be realized between the connectible modules (1, 2, 4), whereby in particular the axle control module (4) is connected to the first function block (51) and the axle regulator module (2) is connected to the second function block (52).

4. Device according to claim 3, whereby the function blocks (51, 52) include interfaces for exchanging data relevant to operating the machine between the device controller (5) and the modules (1, 2, 4) and between the modules (1, 2, 4) themselves.

5. Device according to one of the previous claims, whereby the supply of energy to the machine axles using the power module (1) can be controlled by means of the device controller (5), in particular, a pulse width modulator intended to generate actuator control currents.

6. Device according to one of the previous claims, whereby a control unit can be connected.

7. Device according to one of the previous claims, whereby a further module (3) in the form of an input/output unit (3) is an integral component of the device and is arranged within the device on at least one of the modules (1, 2, 4) by means of a docking interface.

8. Processing machine, in particular a machine tool, with a device according to one of the previous claims.

9. Robot with a device according to one of the previous claims 1 to 7.

## Revendications

1. Dispositif pour l'exploitation d'une machine dotée de plusieurs axes à entraînement électrique, en particulier une machine-outil effectuant des séquences de mouvements dans le cadre de son fonctionnement, **caractérisé en ce que** le dispositif est conçu pour être intégré à une armoire de commande et comprend un boîtier (81), un module de puissance (1) pour l'alimentation en énergie électrique de plusieurs entraînements d'axes, un module de réglage d'axe (2) pour le réglage de plusieurs paramètres spécifiques aux axes et un module de commande d'axe (4) pour la commande de plusieurs entraînements d'axes entre eux, **caractérisé en ce que** les modules (1, 2, 4), en tant que partie intégrante du dispositif à l'intérieur du boîtier (81), sont regroupés entre eux, **caractérisé en ce qu'**une commande de dispositif (5) fait partie intégrante du dispositif, **caractérisé en ce que** la commande de dispositif (5) assure la coordination temporelle des processus fonctionnels du dispositif réalisés au moyen des modules (1, 2, 4),
**caractérisé en ce que** les fonctions du module de réglage d'axe (2) et du module de commande d'axe (4) sont réalisées au moyen de l'une des deux unités de calcul isolées connectées chacune à l'un des modules (2, 4) à l'aide d'un système d'exploitation en temps reel, **caractérisé en ce que** les deux systèmes d'exploitation en temps réel peuvent être commandés au moyen de la commande de dispositif (5), **caractérisé en ce que** la communication entre au moins deux modules (1, 2, 4) est également réalisée par la commande de dispositif (5), **caractérisé en ce que** l'appareil d'émission de signal (53) basée sur le temps intégré par la commande de dispositif (5) et destiné à la génération de signaux de commande pour les modules (1, 2, 4), **caractérisé en ce que**, par l'intermédiaire des signaux de commande, l'exécution de code informatique peut être commandée en liaison avec des interruptions d'au moins l'un des modules (1, 2, 4) et **caractérisé en ce que** la commande de dispositif (5) est réalisée au moyen d'une logique programmable intégrée à au moins l'un des modules (1, 2, 4).

2. Dispositif selon l'une la revendication 1, **caractérisé en ce que** les fonctionnalités de la commande de dispositif (5) elles-mêmes peuvent également être commandées par l'intermédiaire de signaux de commande.

3. Dispositif selon la revendication 2, **caractérisé en ce que** la commande de dispositif (5)
intègre au moins deux blocs fonctionnels (51, 52) au moyen desquels au moins deux modules (1, 2, 4) peuvent être raccordés à la commande de dispositif (5) de façon à ce que les signaux de commande créés par l'appareil d'émission de signal (53) pour commander aux modules raccordables (1, 2, 4) une interruption peuvent être transférés aux modules (1, 2, 4) et/ou de façon à ce qu'une communication puisse être établie entre les modules raccordables (1, 2, 4) et les modules (1, 2, 4) et caractérisé particulièrement **en ce que** le module de commande d'axe (4) est raccordé au premier bloc fonctionnel (51) et le module de réglage d'axe (2) est raccordé au deuxième bloc fonctionnel (52).

4. Dispositif selon la revendication 3, **caractérisé en ce que** les blocs fonctionnels (51, 52) intègrent des interfaces pour l'échange des données relatives au fonctionnement de la machine entre la commande de dispositif (5) et les modules (1, 2, 4), ainsi qu'entre les modules (1, 2, 4).

5. Dispositif selon l'une des revendications précédentes, **caractérisé en ce que** la commande de dispositif (5) permet de commander l'alimentation en énergie des axes de la machine lors de l'utilisation du module de puissance (1), particulièrement un modulateur de largeur d'impulsion prévu pour la génération de courants de commande d'entraînements.

6. Dispositif selon l'une des revendications précédentes, **caractérisé en ce qu'**une unité de commande peut être raccordée.

7. Dispositif selon l'une des revendications précédentes, **caractérisé en ce qu'**un module supplémentaire (3), sous la forme d'une unité d'entrée/sortie (3), fait partie intégrante du dispositif et se trouve connecté au sein du dispositif à au moins l'un des modules (1, 2, 4) au moyen d'une interface de connexion.

8. Machine, particulièrement une machine-outil, dotée d'un dispositif selon l'une des revendications précédentes.

9. Robot doté d'un dispositif selon l'une des revendications précédentes 1 à 7.
